# EUROPEAN PATENT APPLICATION

(11) **EP 1 122 911 A2**
(43) Date of publication of application: **08.08.2001**
(21) Application number: 01301039.2
(22) Date of filing: 06.02.2001
(51) Int. Cl.: H04L 12/18

(54) **Method and device for computer communication**

(30) Priority: 07.02.2000 JP 2000029537
(71) Applicant: Isao Corporation, Tokyo 107-6032 (JP)
(72) Inventor: Okawa, Isao, Isao Corporation, Tokyo 107-6032 (JP); Takakura, Tetsuo, Isao Corporation, Tokyo 107-6032 (JP); Sato, Masaomi, CSK Corporation, Tokyo 163-0227 (JP)
(74) Representative: Nicholls, Michael John

(57) **Abstract**

The communication system is intended to communicate by using client devices connected to the server device through the network. The server device comprises a matching unit which transmits the information about users as candidates for participants in the chat to the client devices, and a chat processing unit which transmits information for starting the chat to the client devices of the selected users and the client device making the request, when start of chat is requested.

## Description

The present invention relates to a technology that allows a plurality of unspecified users to access a network and communicate easily with each other by utilizing a virtual dialog space or message distribution.

Along with the recent advancement in the Internet technology, a communication system for mutual communications by plural users by utilizing this Internet technology is widely spreading. General communication systems by the Internet include the WWW (World Wide Web) for looking up a Web page stored in a server device by using a lookup software (briwser) of a client device, an electronic mail for distributing character data or image data electronically through a server device, and the chat for allowing plural users to write statements in a dialog style on a Web page stored in the server device.

However, such conventional communication systems are different from an actual communication because it is not real time or the degree of freedom of selecting a dialog partner is low, and cannot fully satisfy the users.

For example, in the WWW, generally, the Web page stored in the server device cannot be read unless the user downloads it. Therefore, it lacks in the real-time operation, and it is difficult to send information actively to a passive user.

In the electronic mail, the information can be sent somewhat actively to a specific user, but the mail data stored in the server device cannot be read unless the user downloads it. Therefore, same as in the Web page, it lacks in the real-time operation, and the activeness is not sufficient.

On the other hand, in the chat, the dialog statements entered through the client device is entered almost instantly in the Web page for chat (chat page) stored in the server device, and in this respect it is real time, and excellent as a virtual dialog space.

In the conventional chat, however, no dialog starts unless the user opens the chat page and enters a dialog statement. Therefore, an active communication cannot be made with a user not opening the chat page, or a user opening the chat page but hesitant about participating in the dialog. In this respect, the chat, like the Web page or electronic mail, has a common problem of difficulty in sending information actively to a passive user.

As other problem of these conventional communication systems, since each system is presented individually, the unity among the systems is poor.

When a user of the chat desires to talk individually to some of the plural users participating in the same chat, an electronic mail must be sent by separating starting up an electronic mail system, and smooth communication is not easy.

Accordingly, by enhancing the unity of the systems, communication systems for solving such problems have been proposed.

For example, Japanese Laid-open Patent No. 9-182046 discloses a system in which an interface control program is provided for uniformly controlling the modules of the individual communication tools in order to mutually link the communication tools such as electronic mail, viewphone or whiteboard.

In this system, the viewphone screen and whiteboard screen are displayed on a same screen. According to this system, the information commonly used in the individual communication tools is managed uniformly, and each communication tool can be utilized on the basis of this information.

Japanese Laid-open Patent No. 11-110179 discloses a technology in which the home page and chat page are disposed parallel on a same screen in order to mutually link the communication tools such as the home page, bulletin board, and chat.

In this system, the home page and chat page can be individually changed over to other contents.

Japanese Laid-open Patent No. 9-128343 discloses a technology in which users of a same information are automatically displayed on the screen, and communication between clients is established as desired in order to promote mutual communication of clients. In this system, the user information is accumulated as shared information, and each user can obtain the information about other user by referring to the accumulated information.

In such conventional systems, however, although the unity of communication systems may be somewhat improved, the intrinsic problems of the communication systems are still unsolved.

That is, for using the electronic mail or chat service, the user must open the page and send message, and hence the problem of difficult of sending information actively to a passive user is not solved at all.

For receiving the electronic mail, the user must download the mail data, and the problem of lack in real-time operation is still unsolved.

By contrast, in actual communications, it is possible to speak to a person not willing to talk, or communicate actively with a passive person. Inmost cases, by such active communications, some information hitherto not noticed may be obtained, or it is possible to encounter an unknown person incidentally.

Such incidental communication was quite impossible in the conventional communication systems, and it is very interesting for users.

It is therefore an object of the present invention to achieve a cyberspace for realizing communications among unspecified users, and in particular to build up a novel communication system for newly arousing the interest of users by realizing an incidental communication.

Further in actual communications, the dialog content is transmitted to the partner in real time by voice. Such real-time information transmission promotes smooth communications, and the trouble for starting up a communication is solved, and the user can be attracted to the dialog.

It is an another object of the present invention to achieve a further smooth communication system by enhancing the real-time operation of dialog in the communication system.

In such communication system, when multiple users communicate, in order to build up more comfortable communication environment, it is desired to develop an environment for promoting mutual and appropriate communication among users, and also an environment for limiting inappropriate communication.

As an example of the former environment, the user accessing a Web page may be provided with the information of other users accessing the same Web page. In this case, others using having the same hobby or the like can be searched easily, and the communication is promoted.

Such information presenting system is realized in Japanese Laid-open Patent No. 9-128343 in which the individual information referring to the same information is displayed as an icon.

In this system, however, since the individual information is merely displayed on the screen, in a wide system participated by many users, the information may not be displayed completely on the screen, or if displayed, it is difficult to select a user corresponding to the hobby from too many users.

If referring merely to the same information, the hobby or interest is not always matched, and more directly it is preferred to select a user depending on the attribute such as the hobby or occupation of the user.

It is still another object of the present invention to achieve mutual and appropriate communication among users by allowing to select the information about the users easily on the basis of the attribute or the like.

Morepreferably, when users encountering by incidental communication become friendly, they are expected to communication with each other more frequently than with other users, and it is preferred to facilitate repeated communications.

However, in the system disclosed in Japanese Laid-open Patent No. 9-128343, general users and friendly users are not distinguished but are managed uniformly as users of same level. It is difficult to refer to the information of friendly users, and smooth communication is difficult.

It is still another object of the invention to realize smooth communication by the user information individually depending on the degree of friendliness.

On the other hand, as the system for limiting inappropriate communication, for example, an ID control system is considered, in which each user is provided with own ID, the own ID is specified when using the system. In such ID control system, if there is any user acting against law or ethics, the input of the ID given to this user is monitored, and it is banned to use the system by using this ID, so that inappropriate users may be excluded from the system.

In such ID control system, if the inappropriate user is excluded once, the same user can obtain a new ID by newly entering the system, and may do an evil act again, and it cannot be prevented sufficiently.

It is still another object of the present invention to limit inappropriate encounter of users by securely preventing use of the system by inappropriate users.

In the communication system according to one aspect of the present invention, the server device comprises a matching unit which selects a candidate user for participant in a chat according to a specified standard, and transmits the information about this user to a client device, and a chat processing unit which transmits specified information for starting a chat, when start of a chat is requested by specifying whole or part of users selected by the user selecting unit from one client device, to the client device of this specified user, and the one client device issuing this request. Furthermore, the client device comprises a display unit which displays the region for chat on the basis of the specified information when this information for starting a chat is transmitted from the server device.

Thus, when the user of the client device requests opening of a chat by designating a user selected by the matching unit, a chat room is opened for this user of the client device and the designated user. That is, each user can communicate with a designated user by opening a chat room actively. Therefore, same as in reality or more than in reality, real-time and dynamic communication can be made, and a new communication system capable of newly arousing the interest of the users can be built up.

In the communication system according to another aspect of the present invention, the server device comprises a matching unit which selects a candidate user for destination of transmission of message according to a specified standard, and transmits the information about this user to a client device, and a message processing unit which transmits the content of the message to the client device of the specified user, when message transmission is requested by specifying whole or part of users selected by the user selecting unit from one client device, and when the content of the message is specified. Furthermore, the client device comprises output means for issuing a specified output, when the content of the message is transmitted from the server device, so that at least its presence may be recognized by the user of the client device.

Thus, when the user of the client device sends a message by designating a use selected by the matching unit, the presence of the message and its content are immediately transmitted to this designated user. Therefore, the message can be transmitted in real time without having to wait until the recipient downloads as in the conventional electronic mail. Therefore, real-time and dynamic communication is made, and the trouble when starting up the communication can be eliminated, and a novel communication system capable of attracting the user to the dialog can be built up.

Furthermore, the matching unit of the server device selects the user of other client device to which the same information is transmitted in the last place, concerning the information transmitted in the last place to each client device, among the users of the client devices of which connection is established at the present. Thus, for example, when a user is reading a Web page, other users reading the same Web page can be easily known. At the same time, for such users, the chat or PB message can be sent, and therefore hitherto unknown people can be encountered incidentally, and the circle of communication is further widened.

Furthermore, the matching unit of the server device selects the user preliminarily registered as having specific relation by the users of each client device, among the users of the client devices of which connection is established at the present. Thus, for example, other users encountered on the system can be registered in the friend list, and the partner of chat or message transmission can be selected by referring to this friend list, and it is easier to communicate with people sharing the same hobby, and appropriate encounter of users is promoted, and more friendly communication is possible.

Furthermore, the matching unit of the server device arrays or stratifies the selected users according to a specified standard. Thus, since the selected users are displayed as being arrayed and stratified, if multiple users are displayed, a specific user can be easily searched from these multiple users. Therefore, smoother communication is possible.

Furthermore, the server device comprises a validation processing unit which rejects request of a specific processing, when a specific processing is requested from one client device to other client device, if the user of the one client device has been already registered as having a specific relation by the user of the other client device. Thus, for example, by registering undesired partners preliminarily in the rejection list, if opening of chat or transmission of message is requested from the partner registered in the rejection list, such request can be rejected automatically. Therefore, inappropriate communication can be limited.

In the communication system according to still another aspect of the present invention, the server device comprises a profile storing unit which stores first identification information preliminarily given to the user for identifying the user in the network, second identification information preliminarily given to the user for identifying the user in the communication system, and permit information relating to approval or disapproval of use of the service to the user, being the information stored at least corresponding to the first identification information, and a validation processing unit which extracts the permit information corresponding to the first identification information from the profile storing unit when the first identification information and second identification information are presented from the client device and use of specific service is requested, and judges approval or disapproval of presentation of service to the client device on the basis of this permit information and the request for use presented from the client device.

Thus, by judging approval or rejection of use of the system by using the first identification-information, the use of the system by a person prohibited to use this system can be securely excluded. That is, if such person obtains second identification information newly by entering the system again, the first identification information is invariable in the system, and hence such person can be excluded.

In the communication system according to still another aspect of the present invention, the server device comprises a profile storing unit which stores identification information preliminarily given to the user for identifying the user in the communication system, and an arbitrary handle name of the user, by relating to each other, and an ID converting unit which extracts the handle name corresponding to the identification information from the profile storing unit when the identification information is presented from one client device and use of specific service relating to other client device is requested, and converting the identification information depending on this handle name.

Thus, the identification information of each user is displayed to other users as handle name, and the identification information is not directly displayed. Therefore, unexpected exposure of identification information to other users can be prevented.

The server device according to still another aspect of the present invention comprises a matching unit which selects a candidate user for participant in a chat according to a specified standard, and transmits the information about this user to a client device, and a chat processing unit which transmits specified information for starting a chat, when start of a chat is requested by specifying whole or part of users selected by the user selecting unit from one client device, to the client device of this specified user, and the one client device issuing this request.

Thus, by building up a communication system by using this server device, the chat is opened dynamically according to the request from the client device, and real-time and dynamic communication is made, and a novel communication system arousing the interest of the users newly can be built up.

The server device according to still another aspect of the present invention comprises a matching unit which selects a candidate user for destination of transmission of message according to a specified standard, and transmits the information about this user to a client device, and a message processing unit which transmits the content of the message to the client device of the specified user, when message transmission is requested by specifying whole or part of users selected by the user selecting unit from one client device, and when the content of the message is specified.

Thus, by building up a communication system by using this server device, the message is transmitted immediately according to the request from the client device, and real-time and dynamic communication is made. Hence, the trouble of starting up the communication can be eliminated, and a novel communication system capable of attracting the user to the dialog can be built up.

Furthermore, the matching unit selects the user of other client device to which the same information is transmitted in the last place, concerning the information transmitted in the last place to each client device, among the users of the client devices of which connection is established at the present. Thus, by building up a communication system by using this server device, for example, when a user is reading a Web page, other users reading the same Web page can be easily known. At the same time, for such users, the chat or PB message can be sent, and therefore hitherto unknown people can be encountered incidentally, and the circle of communication is further widened.

Furthermore, the matching unit selects the user preliminarily registered as having specific relation by the users of each client device, among the users of the client devices of which connection is established at the present. Thus, by building up a communication system by using this server device, for example, other users encountered on the system can be registered in the friend list, and the partner of chat or message transmission can be selected by referring to this friend list, and it is easier to communicate with people sharing the same hobby, and appropriate encounter of users is promoted, and more friendly communication is possible.

Furthermore, the matching unit is arrays or stratifies the selected users according to a specified standard. Thus, by building up a communication system by using this server device, since the selected users are displayed as being arrayed and stratified, if multiple users are displayed, a specific user can be easily searched from these multiple users. Therefore, smoother communication is possible.

Furthermore, the server device comprises a validation processing unit which rejects request of a specific processing, when a specific processing is requested from one client device to other client device, if the user of the one client device has been already registered as having a specific relation by the user of the other client device. Thus, by building up a communication system by using this server device, for example, by registering undesired partners preliminarily in the rejection list, if opening of chat or transmission of message is requested from the partner registered in the rejection list, such request can be rejected automatically. Therefore, inappropriate communication can be limited.

The server device according to still another aspect of the present invention comprises a profile storing unit which stores first identification information preliminarily given to the user for identifying the user in the network, second identification information preliminarily given to the user for identifying the user in the communication system, and permit information relating to approval or disapproval of use of the service to the user, being the information stored at least corresponding to the first identification information, and a validation processing unit which extracts the permit information corresponding to the first identification information from the profile storing unit when the first identification information and second identification information are presented from the client device and use of specific service is requested, and judges approval or disapproval of presentation of service to the client device on the basis of this permit information and the request for use presented from the client device.

Thus, by building up a communication system by using this server device, therefore, by judging approval or rejection of use of the system by using the first identification information, the use of the system by a person prohibited to use this system can be securely excluded. That is, if such person obtains second identification information newly by entering the system again, the first identification information is invariable in the system, and hence such person can be excluded.

The server device according to still another aspect of the present invention comprises a profile storing unit which stores identification information preliminarily given to the user for identifying the user in the communication system, and an arbitrary handle name of the user, by relating to each other, and an ID converting unit which extracts the handle name corresponding to the identification information from the profile storing unit when the identification information is presented from one client device and use of specific service relating to other client device is requested, and converting the identification information depending on this handle name.

Thus, by building up a communication system by using this server device, the identification information of each user is displayed to other users as handle name, and the identification information is not directly displayed. Therefore, unexpected exposure of identification information to other users can be prevented.

In the communication method according to still another aspect of the present invention a server device executes a matching step of selecting a candidate user for participant in a chat according to a specified standard, and transmitting the information about this user to a client device, the server device executes a chat processing step of transmitting specified information for starting a chat, when start of a chat is requested by specifying whole or part of users selected by the user selecting unit from one client device, to the client device of this specified user, and the one client device issuing this request, and the client device executes a display step of displaying the region for chat on the basis of the specified information when this information for starting a chat is transmitted from the server device.

Thus, by executing each procedure in the communication system, the chat is opened dynamically according to the request from the client device, and real-time and dynamic communication is made, and a novel communication system arousing the interest of the users newly can be built up.

In the communication method according to still another aspect of the present invention a server device executes a matching step of selecting a candidate user for destination of transmission of message according to a specified standard, and transmitting the information about this user to a client device, the server device execute a message processing step of transmitting the content of the message to the client device of the specified user, when message transmission is requested by specifying whole or part of users selected by the user selecting unit from one client device, and when the content of the message is specified, and the client device executes an output step of issuing a specified output, when the content of the message is transmitted from the server device, so that at least its presence may be recognized by the user of the client device.

Thus, by executing each procedure in the communication system, the message is transmitted immediately according to the request from the client device, and real-time and dynamic communication is made. Hence, the trouble of starting up the communication can be eliminated, and a novel communication system capable of attracting the user to the dialog can be built up.

In the communication method according to still another aspect of the present invention a server device executes a profile storing step of storing first identification information preliminarily given to the user for identifying the user in the network, second identification information preliminarily given to the user for identifying the user in the communication system, and permit information relating to approval or disapproval of use of the service to the user, being the information stored at least corresponding to the first identification information, and the server device executes a validation processing step of extracting the permit information corresponding to the first identification information from the profile storing unit when the first identification information and second identification information are presented from the client device and use of specific service is requested, and judging approval or disapproval of presentation of service to the client device on the basis of this permit information and the request for use presented from the client device.

Thus, by executing each procedure in the communication system, therefore, by judging approval or rejection of use of the system by using the first identification information, the use of the system by a person prohibited to use this system can be securely excluded. That is, if such person obtains second identification information newly by entering the system again, the first identification information is invariable in the system, and hence such person can be excluded.

In the communication method according to still another aspect of the present invention a server device executes a profile storing step of storing identification information preliminarily given to the user for identifying the user in the communication system, and an arbitrary handle name of the user, by relating to each other, and the server device executes an ID converting procedure of extracting the handle name corresponding to the identification information from the profile storing unit when the identification information is presented from one client device and use of specific service relating to other client device is requested, and converting the identification information depending on this handle name.

Thus, by executing each procedure in the communication system, the identification information of each user is displayed to other users as handle name, and the identification information is not directly displayed. Therefore, unexpected exposure of identification information to other users can be prevented.

Moreover, the computer-readable recording medium according to still another aspect of the present invention stores a computer program which when executed realizes the method according to the present invention on a computer.

Another aspect of the invention provides a computer program comprising program code means for executing, on a programmed computer, any of the steps of the invention.

The invention will be further described by way of example with reference to the accompanying drawings, in which:-

Fig. 1 is a block diagram of an entire communication system according to an embodiment of the invention.

Fig. 2 is a block diagram of a server device.

Fig. 3 is a block diagram of a client device.

Fig. 4 shows examples of pages displayed in the monitor of each client in various services.

Fig. 5 is a flowchart showing the issuing process of communication ID.

Fig. 6 is a flowchart showing the log-on process.

Fig. 7 is a flowchart showing display process of online

URL locate page P2.

Fig. 8 is a flowchart showing create and update process of online URL locate list by matching unit.

Fig. 9 is a flowchart showing create and update process of WWW URL locate list.

Fig. 10 is a flowchart showing create and update process of friend list and rejection list.

Fig. 11 is a flowchart showing opening process of friend chat.

Fig. 12 is a flowchart showing execution process of PB message.

Fig. 13 shows an example of composition of connection state list.

Fig. 14 shows an example of composition of URL locate source list.

Fig. 15 shows an example of composition of online URL locate list.

Fig. 16 shows an example of composition of WWW URL locate list.

Fig. 17 shows an example of friend list.

Fig. 18A and Fig. 18B show a WWW URL locate list displayed in a radar form.

Fig. 19 shows an example of display of chat page.

Fig. 20A and Fig. 20B show examples of display of inquiry page and PB message page.

Preferred embodiment of the communication system of the invention are described in detail below while referring to the accompanying drawings. It must be noted, however, that the invention is not limited to this embodiment alone.

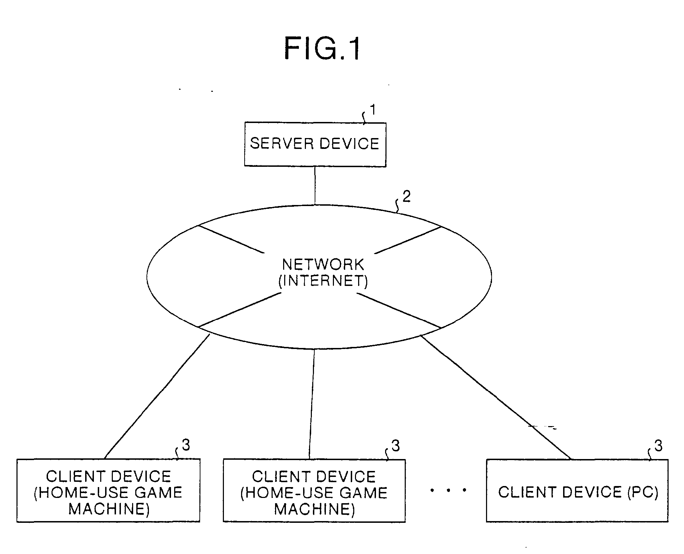

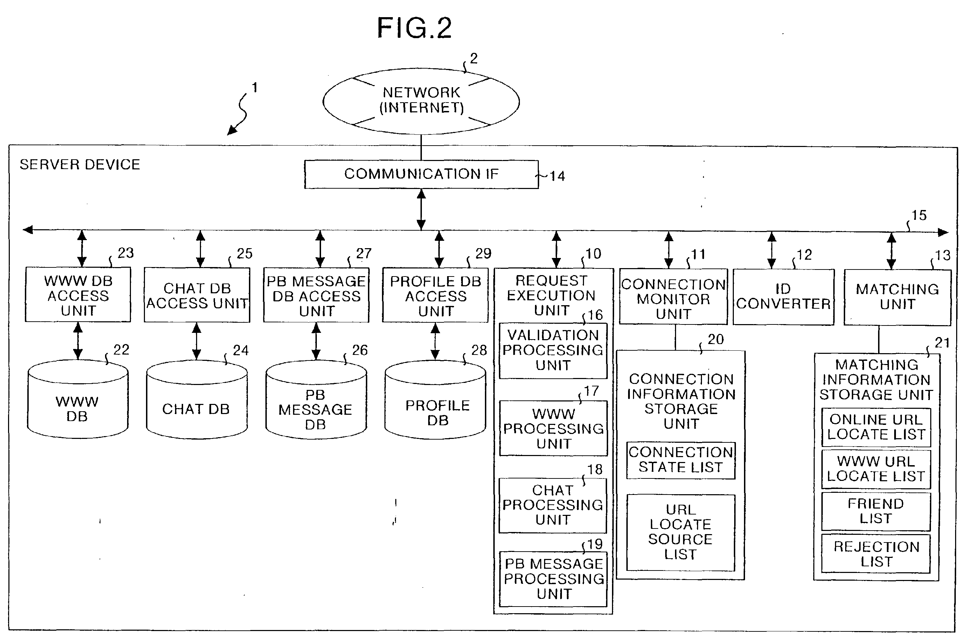

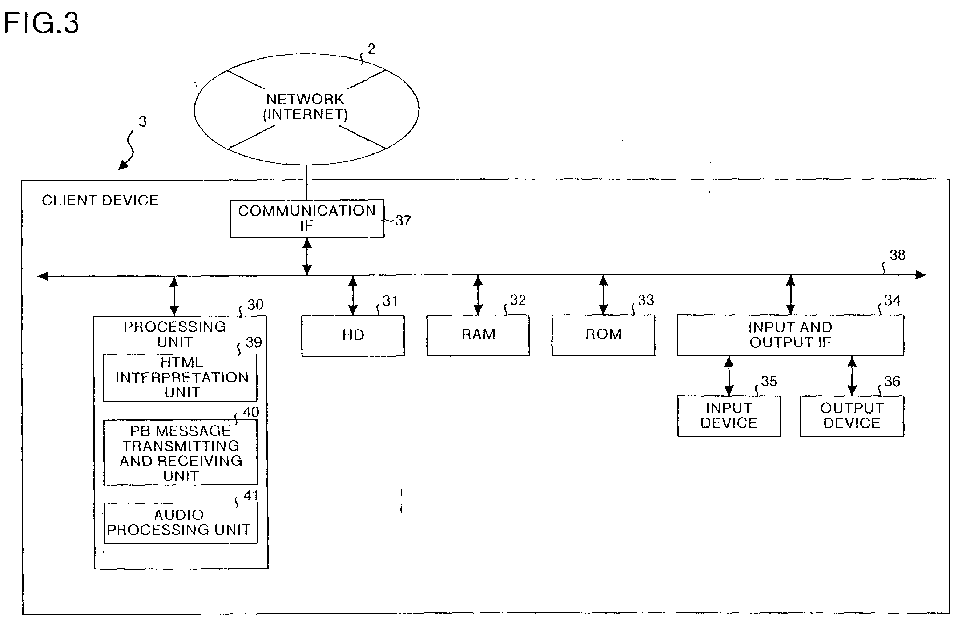

Fig. 1 is a block diagram of an entire communication system according to an embodiment of the invention, Fig. 2 is a block diagram of a server device, and Fig. 3 is a block diagram of a client device.

The communication system according to the embodiment (this system) is composed of, as shown in Fig. 1, a server device 1 and plural client devices 3, which are connected to each other so as to communicate through a network 2 such as the Internet. The outline of the service presented by this system is explained, and then the configuration and processing of the system are described in detail.

### (Outline of service)

In this system, the user of each client device 3 can use various services in order to communicate with other users.

Main services presented by this system include the WWW, chat, and private message (PB message) . As auxiliary services for executing these services smoothly, for example, the profile reference, online URL locate list, WWW URL locate list, friend list, and rejection list can be utilized. These services can be used either individually, or plural services can be used simultaneously or in linkage on a same screen.

Of the main services, the WWW is a service for allowing to read the Web page stored-in the service inside or outside of this system by using the client device 3, basically same as in the conventional manner.

The chat is, as known hitherto, a service for offering mutual dialog of users in a virtual meeting place (chat room) . In particular, in this system, in addition to the conventional function of general chat, a chat room can be opened actively to other user.

The PB message is transmission of a message individually by a user to other user. In particular, as compared with the conventional electronic mail, it is sent in real time, and a message can be transmitted actively to other user.

Of the auxiliary services, the profile reference is a service allowing the user of each client device 3 to register the own profile in the server device 1 and other user to refer to this profile as required. Each user, by referring to the profile, can make up the friend list or rejection list as mentioned later.

The online URL locate list is a service for informing each user of the presence of other online users in the system.

The WWW URL locate list is a service for informing each user of the WWW service of presence of other users accessing the same Web page as the user.

Each user, by referring to the online URL locate list or WWW URL locate list, can easily search other users sharing the same hobby, and make up the friend list or rejection list as mentioned below.

The friend list is a service for allowing each user to register other users as own friends in the server device 1. This friend list can be referred to when selecting the destination of transmission in the chat service or PB message service, and the circle of communication is widened, and the selection operation is easier.

The rejection list is a service for allowing each user to register other users as the users not desired to communicate with (rejectees) in the server device 1. If chat is requested or PB message is sent from a rejectee registered in this rejection list, such communication request can be rejected automatically.

### (System composition: Server device)

The composition of the system for presenting such services is explained.

First, the server device 1 is explained. In Fig. 2, the server device 1 mainly comprises a request execution unit 10, a connection monitor unit 11, an ID converter 12, a matching unit 13, plural data base systems, and a communication interface (communication IF) 14, and each unit is connected so as to communicate with each other through a communication path 15 such as network and bus. The server device 1 is further connected to communicate with the network 2 through router or other communication device and exclusive line not shown in the drawing.

Of these constituent elements of the server device 1, the request execution unit 10 is means for executing the request for various services from the client device 3. This request execution unit 10 includes a validation processing unit 16 for processing validation at the time of log-in by the user into this system or judging approval or rejection of user of the service, a WWW processing unit 17 for processing about the WWW, a chat processing unit 18 for processing about the chat, and a PB message processing unit 19 for processing about the PB message.

The connection monitor unit 11 is means for monitoring the connection state of each client device 3. More specifically, it monitors the connection establishment state of each client device 3, and the URL (Uniform Resource Locator) of the Web page last transmitted to each client device 3, at specific intervals. The connection establishment state acquired by this monitoring is temporarily stored as the connection state list, and the acquired URL as the URL locate source list, each in the connection information storage unit 20.

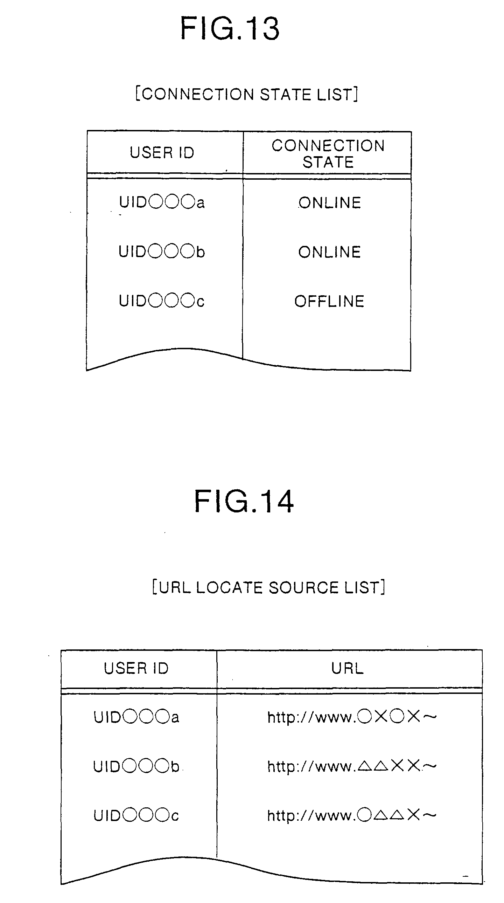

Fig. 13 shows an example of composition of connection statelist. In Fig. 13, the connection state list is composed of the user ID of each user, and the corresponding connection state (online or offline) of each user. This connection state can be acquired from the contracted ISP mentioned later.

Fig. 14 shows an example of composition of URL locate source list. In Fig. 14, the URL locate source list is composed of the user ID of each user and the corresponding URL of the Web past last sent to each user. The URL of the Web page stored in the server device 1 outside of this system can be acquired from the outside server device 1 by permission of the outside server device 1.

The ID converter 12 converts the user ID or CommID mentioned later and the handle name mentioned later, mutually as required. By this conversion, only the handle name of other user is displayed to each user, and unexpected exposure of user ID or CommID can be prevented.

The matching unit 13 creates and updates the online URL locate list, WWW URL locate list, friend list, and rejection list, on the basis of the information acquired from the parts of the server device 1. Among them, the online URL locate list and WWW URL locate list are created and updated on the basis of the URL locate source list stored in the connection information storage unit 20. The friend list and rejection list are created and updated on the basis of the friend information and rejectee information stored in a profile DB 28 described later. The specific content of each list is explained later. The created lists are temporarily stored in the matching information storage unit 21. The matching unit 13 also has a function of arraying and stratifying each list so as to be read easily by the user, and this point is explained afterwards.

Next, each database system of the server device 1 is explained. The database system is composed of a database (DB) for storing various data, and a database access unit (DB access unit) as DBMS (database management system) for managing the database such as writing and reading of information (information operation) in the DB.

Specifically, a WWW DB 22 for storing plural Web pages, and a WWW DB access unit 23 for operating information in the WWW DB 22 are provided. The Web pages include an initial page of this system, a base page for user information reference, a base page for chat room. These Web pages are prepared in HTML (Hypertext Markup Language) source codes, preliminarily or as required, by the administrator of this system or by the users, and stored in the WWW DB 22. The Web pages are not limited to so-called static pages, but may be also composed as dynamic pages including script codes described in Perl or the like or Java script codes, as required, in order to achieve the CGI (Common Gateway Interface). These script codes are interpreted and executed in the WWW processing unit 17.

The database system further comprises a chat DB 24 for storing the information about the chat, and a chat DB access unit 25 for operating information about the chat DB 24. Herein, the information about the chat includes the status information showing the opening state of the chat room, the room ID provided in each chat room, and the room key necessary for joining the chat room, and they are mutually related and stored in the chat DB 24. Such chat information is created and updated dynamically depending on the requirement.

The database system still more comprises a PB message DB 27 for storing the information about the PB message, and a PB message DB access unit 27 for operating the information about the PB message DB 26. The information about the PB message includes, for example, the source and destination of transmission and content of the PB message transmitted through the client device 3, and presence or absence of reception of this message, and they are mutually related and stored in the PB message DB 26. Such PB message information is also created and updated dynamically depending on the requirement.

Moreover, a profile DB 28 for storing user information, and a profile DB access unit 29 for operating information about the profile DB 28 are provided. The user information include the user ID, password, communication ID (CommID), nickname (handle name) of each user in this system, profile of each user, friend information, rejection information, and banned user list.

Among them, the user ID is the identification information (first identification information) provided in order to identify each user, given to the user from the ISP (Internet Service Provider) when the user contracts with the ISP for subscribing the service of connection of the own client device 3 to the Internet. At this time, each user registers an arbitrary password known to the user and the ISP only. As the ISP, the ISP in contract relation with this system for presenting specified information (contracted ISP) is selected.

The CommID is the identification information (second identification information) for identifying the user in the system, given to the user from the server device 1 when each user is enrolled in this system.

The profile of each user includes an arbitrary handle name which is the own nickname in the system, sex, age, address, field of interest, hobby, blood type, URL of own home page if any, and other information relating to the attribute of each user. In particular, this profile is not limited to the text data alone, but may include binary data such as video and audio. The profile can be registered at an arbitrary timing after each user is enrolled in this system, and may be edited as required.

The friend information is the information for specifying other users registered as friends by each user. The rejection information is the information for specifying the users registered as rejectees by each user. Specifically, the friend information and rejection information are composed by using the user ID.

The banned user list is a list for specifying banned users in order to prohibit the users (banned users) from utilizing this system, if there are users acting evil in the system against the law or ethics, users to be excluded from this system due to other reasons. The banned user list is composed by using the user ID of the banned user, and may be stored at an arbitrary timing by the administrator of this system.

The constituent elements of the server device 1 are described so far, but the illustrated elements are only conceptual in function and are not always composed physically as shown in the drawings.

For example, whole or part of processing functions of the server device 1 may be realized by a CPU (central processing unit) or a program interpreted and executed by this CPU, or may be also realized as hardware by wired logic.

The connection information storage unit 20 and matching information storage unit 21 may be composed by using arbitrary write-once memory device, such as RAM (random access memory) or hard disk (HD).

Further, specific forms of dispersion and integration of the server device 1 are not limited to the illustrated examples alone, but whole or part may be composed by composed by dispersing and integrating functionally or physically, in arbitrary units depending on various loads. For example, the portion relating to presentation function of the Web page is separately composed as WWW server, the portion relating to the chat function as chat server, the portion relating to the PB message function as message server (mail server), and the portion relating to the information management function of the user of the client 3 as database server, and these server groups may be joined together to realize the server device 1. When the server device 1 is thus distributed, each component can be connected to communicate with an arbitrary network such as LAN (Local Area Network) and WAN (Wide Area Network). Actually, as the constituent functions of the server device 1, further, firewall server and DNS ( Domain Name System) server functions are added, which are composed same as in the conventional system and are not specifically described herein.

The composition of the client device 3 will now be explained. As shown in Fig. 3, the client device 3 mainly comprises processing unit 30, HD 31, RAM 32, ROM (read only memory) 33, input and output interface (input and output IF) 34, input device 35, output device 36, and communication IF 37, and these parts are connected so as to communicate data by way of a bus 38. This client device 3 is realized, for example, by a personal computer, or a home-use or professional-use game machine having part of functions specialized for game.

The processing unit 30 of the client device 3 includes HTML interpretation unit 39 for interpreting HTML sentences, PB message transmitting and receiving unit 40 for processing about transmission and reception of PB message, and audio processing unit 41 for processing the audio. The processing by these parts is described later.

These parts of the processing unit 30 may be realized, either entirely or partially, by a CPU or a program interpreted and executed by the CPU. That is, in the HD 31 and ROM 33, a computer program for command the CPU in cooperation with the OS (operating system) and processing is stored. This computer program is executed when loaded into the RAM 32, and each processing part is composed by cooperating with the CPU. However, this computer program may be stored also in an application program server connected to the client device 3 through an arbitrary network, and whole or part of it may be downloaded as required. Alternatively, whole or arbitrary part of the processing units may be realized by hardware by wired logic or the like.

On the other hand, as the input device 35, keyboard, mouse or microphone may be used. A monitor mentioned later may also realizing a pointing device function in cooperation with the mouse. Besides, when the client device 3 is realized as a game machine, as the input device 35, instead of the keyboard or mouse, the controller for the game machine may be used. As the output device 36, the monitor (including the household television) and speaker may be used.

Thus composed client device 3 is connected to the network 2 through modem, TA, router, other communication device and telephone line, or an exclusive line, and can access the server device 1 according to the specified communication protocol (for example, TCP/IP Internet protocol).

The network for connecting the server device 1 and client device 3 is not limited to the Internet, but other desired network may be utilized.

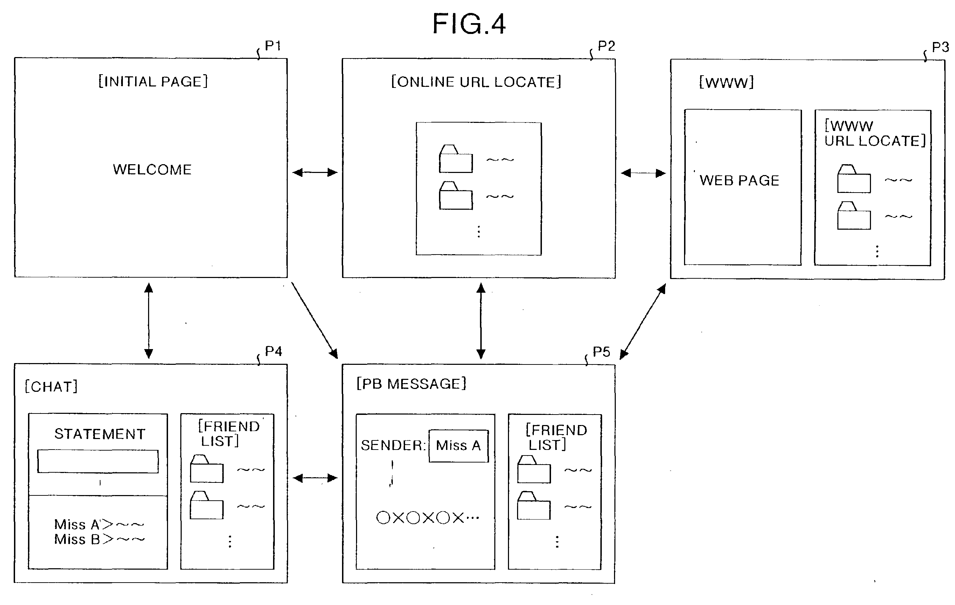

Specific processing of services presented by this system having such composition will now be explained. Fig. 4 shows examples of page displayed on the monitor of each client device 3 in various services. As shown in Fig. 4, pages displayed on the monitor include the initial page P1 displayed right after log-on, online URL locate page P2 for locating the online URL, WWW page P3 for locating the WWW or WWW URL, chat page P4 for chatting, and PB message page P5 for transmitting and receiving PB message.

Although not shown, further, issue page for issuing CommID, and registration page for registering the profile are displayed. These pages can be transferred in an arbitrary order. Fig. 4 shows only examples of pages, and actually these pages may be overlaid on a same screen, or other pages may be displayed. In particular, the chat page P4 and PB message page P5 may be displayed on a same screen at the same time, or the online URL locate page P2 and the WWW page P3 may be displayed on a same screen at the same time.

Contents of services are individually explained below, but these services may be done in series. The sequence of services is not particularly limited to the sequence of explanation unless otherwise noted, and may be done in an arbitrary order.

Now, to begin with, processing for validation of user is explained.

To begin with, when the user subscribes the use of the line with the contracted ISP, the user ID is issued from the contracted ISP to the user. At the same time, the user registers an arbitrary password. The issue of user ID and registration of password are same as in the conventional manner. The user ID and password are presented from the contracted ISP into the server device 1 in this system, and related with each other and stored in the profile DB 28 through the profile DB access unit 29 (hereinafter, the description about the access units 23, 25, 27, 29 when operating information in the DB 22, 24, 26, 28 is omitted) . The meaning of the user ID in this system is explained later.

When the user accesses the server device 1 for the first time, the enrollment is contracted with the server device 1 to enroll in this system. At this time, CommID is given to the user from the server device 1.

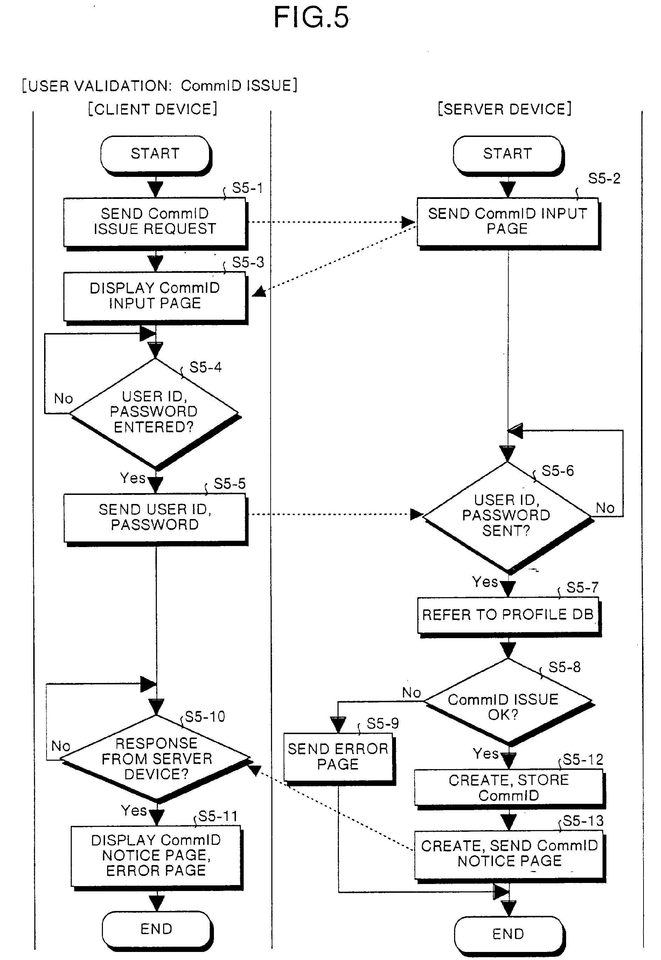

Fig. 5 is a flowchart showing the issue process of communication ID. In Fig. 5, when the user of the client device 3 requests issue of CommID through the input device 35, this issue request is sent to the server device 1 (step S5-1). Receiving this request, the server device 1 transmits an input page for entering necessary information for setting the CommID to the client device 3 (step S5-2).

Specifically, from the client device 3, the URL showing the location of the client device 3 is transmitted together with the CommID issue request command, and this issue request is transferred to the validation processing unit 16. By processing at the validation processing unit 16, the HTML source code of input page is extracted from the WWW DB 22 through the WWW DB access unit 23, and this HTML source code is transmitted to the client terminal device in the HTTP (Hypertext Transfer Protocol) . At this time, the CGI and others included in the HTML source code are executed.

Receiving this transmission, the client device 3 interprets the HTML source code in the HTML interpretation unit 39, and the input page is displayed in the monitor according to the result of this interpretation (step S5-3). The input page, not shown, may be arbitrarily created.

In these processes of extraction, generation, transmission and interpretation of HTML source codes are same in the following processes unless otherwise noted, and individual explanations are omitted.

The input page thus displayed in the monitor urges input of at least user ID and password. When they are entered in the input page, they are transmitted to the server device 1 (steps S5-4, S5-5).

In the validation processing unit 16 of the server device 1, on the basis of the transmitted user ID and password, it is determined whether or not to give CommID by referring to the profile DB 28 (steps S5-6 to S5-8).

Herein, provision with CommID is refused, for example, when the transmitted user ID and password are not stored in the profile DB 28, or CommID has been already issued to the transmitted user ID. In such a case, a corresponding error page is extracted from the WWW DB 22, and is transmitted to the client device 3 (step S5-9). This error page is displayed in the monitor of the client device 3 (steps S5-10, S5-11).

On the other hand, if there is no reason of refusal of provision with CommID at step S5-8, the CommID is generated at random in the validation processing unit 16. This CommID is stored in the profile DB 28 in relation to the already transmitted user ID or the like (step 35-12). At the same time, a notice page for noticing this CommID is generated, and transmitted and displayed in the client device 3 (steps S5-13, S5-10, S5-11). This notice page is generated as the original Web page is extracted from the WWW DB 22, and a new Web page is created by adding the CommID and others to this page. As a result, the CommID is noticed to the user.

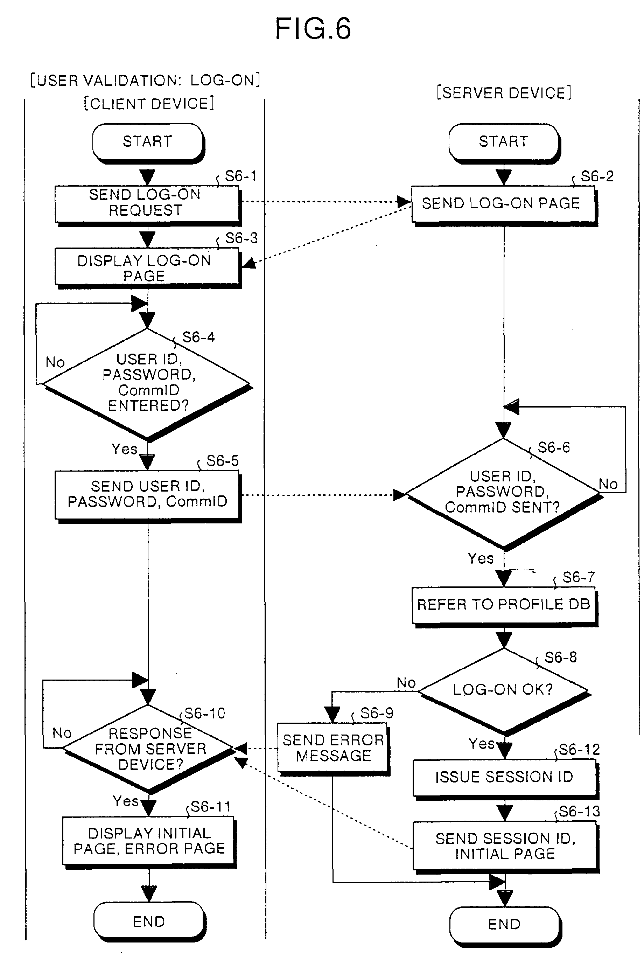

The user thus receiving the issue of CommID can log on into this system by using this CommID. Fig. 6 is a flowchart showing the log-on procedure. In Fig. 6, when log-on request is transmitted from the user (step S6-1), in the server device 1, the log-on page is extracted from the WWW DB 22 by the processing of the validation processing unit 16, and this log-on page is transmitted and displayed in the client device 3 (steps S6-2, S6-3). The log-on page can be created arbitrarily and is not shown herein.

In this log-on page, the user ID, password and CommID are entered and transmitted by the user (steps S6-4, S6-5). In second and subsequent inputs, for example, by storing the user ID entered previously at the time of log-on in the HD 31 of the client device 3 as Cookie, the same procedure can be omitted by reading the environmental variable transmitted through this Cookie at the server device 1 side.

In the validation processing unit 16 of the server device 1, on the basis of the transmitted user ID, password, and CommID, it is determined whether or not to permit log-on by referring to the profile DB 28 (steps S6-7, S6-8).

Log-on is refused, for example, when any one of the entered user ID, password, and CommID does not coincide with the content stored in the profile DB 28, or when the entered user ID is found in the banned user list of the profile DB 28. In such a case, an error page is transmitted to the client device 3, and displayed in the monitor (step S6-9, S6-10).

In such validation process, by judging permission of use of the system by using the banned user list composed of the user ID, the banned users can be excluded securely. If the banned user gets a new CommID by enrolling again into the system, since the user ID is invariable, the banned user can be excluded. Further, if necessary, the name and address of the user presented when contracting with the ISP may be registered in the banned user list, and the banned user can be judged on the basis of such address and other data. In such a case, if the banned user contracts with the ISP again to obtain a new user ID, such banned user can be excluded.

On the other hand, if there is no reason for refusing log-on at step S6-8, the validation processing unit 16 issues a session ID (step S6-12), and the initial page P1 is extracted from the WWW DB 22 (step S6-13). The session ID and initial page P1 are transmitted to the client device 3, and the initial page P1 is displayed in the monitor (step S6-11).

The initial page P1 may be composed of arbitrary content, and by omitting the initial page P1, a page for other service described below may be displayed. Thus, the display page may be selected automatically, for example, by storing an arbitrary URL in the Cookie stored in the HD 31 of the client device 3, and reading the URL from this Cookie right after log-on.

The session ID issued at step S6-12 is used continuously until logging out of this system, and it is transmitted whenever requesting something from the client device 3 to the server device 1, and is used for confirming the validation state of the client 3. Hereinafter, processing of transmission and reception of the session ID is omitted.

From the initial page P1 thus displayed or from other page in this system, it can be transferred to registration page. In this registration page, each user can register the own profile. Specifically, when registration is requested from the client device 3, by the processing of the validation processing unit 16 of the server device 1, the registration page is extracted from the WWW DB 22, and transmitted and displayed in the client device 3. This registration page can be created arbitrarily, and is not shown herein.

When each user enters the own profile in the registration page, this profile is transmitted to the server device 1 together with the user ID. The user ID and profile are related with each other and stored in the profile DB 28. In the registration of the profile, aside from text data, audio data or video data can be registered, and, for example, the audio data can be registered in a format of AIFF (audio interchange file format), and the video data in a format of JPEG (Joint Photographic Experts Group) . Thus registered profile can be called and referred to freely by each user, by selecting the handle name displayed in each list while displaying the online URL locate list, WWW URL locate list, friend list, or rejection list as described below.

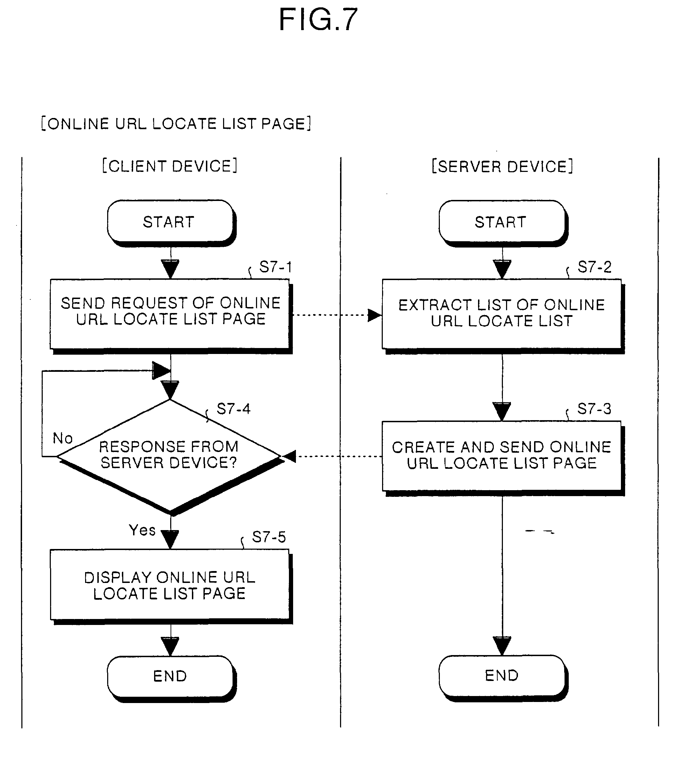

From this registration page or other page in this system, it is possible to transfer to the online URL locate page P2. Fig. 7 is a flowchart showing the display process of online URL locate page P2. In this page, the online URL locate list is displayed. This online URL locate list is created and updated by the matching unit 13, and is stored in the matching information storage unit 21. As shown in Fig. 7, when requested from the client unit 3 (step S7-1), the online URL locate list stored in the matching information storage unit 21 at this moment is extracted (step S7-2), and the online URL locate page P2 is created by using this list (step S7-3), and is transmitted and displayed in the client device 3 (steps S7-4, S7-5).

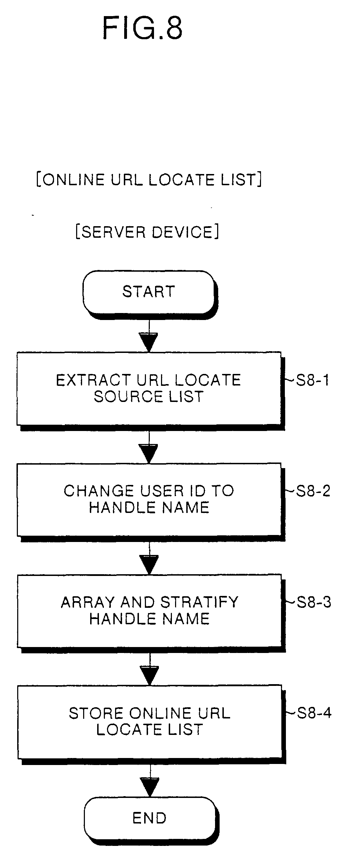

The online URL locate list used herein is created and updated automatically at a specific interval regardless of presence or absence of request from the client device 3. Fig. 8 is a flowchart showing the creating and updating process of online URL locate list by the matching unit 13. In Fig. 8, first, the URL locate source list stored in the connection information storage unit 20 at this moment is extracted (step S8-1), and the user ID is converted to the handle name by the processing of the ID converter 12 in this list (step S8-2). Such conversion is intended to use the handle name only of the user, instead of the user ID, in the online URL list, so that the user ID may not be known to other users.

Thus converted handle names are arrayed according to a specified standard by the processing in the matching unit 13 (step S8-3). The standard of arraying, for example, conforms to the sequence of establishment of log-on. The data of log-on time necessary at this time can be obtained, for example, by storing the connection establishment time in the connection state list, and referring to it.

If the arrayed handle names exceed the monitor display capacity (for example, 100 to 300 persons), some of handle names may deleted according to a prescribed standard. The matching unit 13 stratifies the selected handle handles by a specified number each according to the arraying sequence (grouping).

The online URL locate list thus updated is stored in the matching information storage unit 21 (step S8-4).

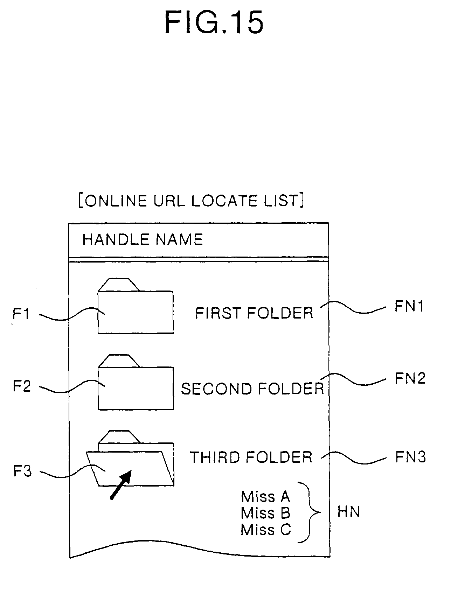

Fig. 15 shows an example of composition of online URL locate list. In Fig. 15, images of plural folders F1 to F3 are disposed above and beneath the online URL locate list, and folder names FN1 to FN3 are shown at the side of each image. Each folder is created by stratification by the matching unit 13, and handle names of a specified number (for example, 50 persons) are related to each other. By selecting from arbitrary folders F1 to F3 (folder F3 in the drawing) by clicking through the input device 35, plural handle names HN related to the folders F1 to F3 are displayed. Of course, the images and layout are mere examples, and circular, stellar or other arbitrary images may be used, and the same function as these folders may be achieved.

The standard of arraying and stratifying by the matching unit 13 may also conform to other arbitrary standard aside from the log-on sequence as mentioned above. For example, by referring to the profile DB 28, the hobby, age, address and others belonging to the handle names can be extracted, and the handle names are can be grouped according to the hobby or the like. In this case, the users can be easily searched by referring to the attribute.

From thus displayed online URL locate list or other page in this system, it is possible to transfer to the WWW. The WWW may be handled same as general WWW through the WWW processing unit 17.

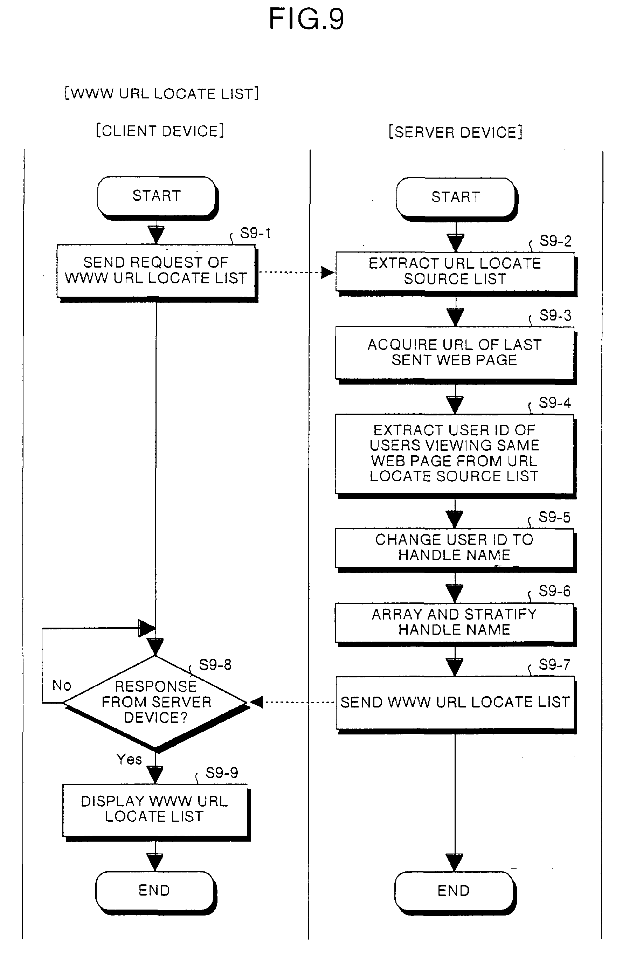

In this WWW, the WWW URL list can be displayed automatically, or by a specific instruction of the user. Fig. 9 is a flowchart showing the creating and updating process of the WWW URL locate list. This WWW URL locate list is displayed by acquiring the necessary information from the URL locate source list of the connection information storage unit 20 on the basis of the URL of the Web page transmitted last to each client device 3. That is, when transmission of WWW URL locate list is requested together with the user ID of each client device 3 (step S9-1), the URL locate source list stored in the matching information storage unit 21 at this moment is extracted (step S9-2). On the basis of the user ID of the client device 3 sending the transmission request, the URL of the Web page last transmitted to the client device 3 is acquired from the URL locate source list (step S9-3).

On the basis of this URL, the user ID of other user reading the same Web page is extracted from the URL locate source list (step S9-4). This user ID is converted into a handle name by the processing of the ID converter 12 (step S9-5). Thus converted handle names are arrayed and stratified according to a specific standard by the processing of the matching unit 13 (step S9-6), and transmitted and displayed in the client device 3 as the WWW URL locate list (steps S9-7 to S9-9).

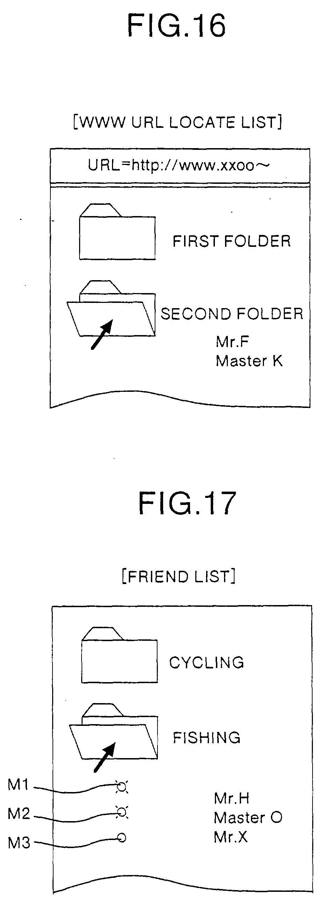

Fig. 16 shows an example of composition of WWW URL locate list. In Fig. 16, the WWW URL locate list is composed nearly same as the online URL locate list in Fig. 15.

As the arraying and stratifying standard of the WWW URL locate list, same as in the case of the online URL locate list, other arbitrary-standard may be also applied. In particular, when the handle names to be displayed exceed the monitor display capacity, it is preferred to select the handle names to be displayed by using a proper standard so as to be searched easier to the user. For example, it is preferred to display preferentially the handle names of the users registered as friends in the profile DB 28, or handle names of users coinciding with the profile registered in the profile DB 28. Alternatively, handle names of users registered as rejectees in the profile DB 28 may be excluded. It is also possible to select merely at random.

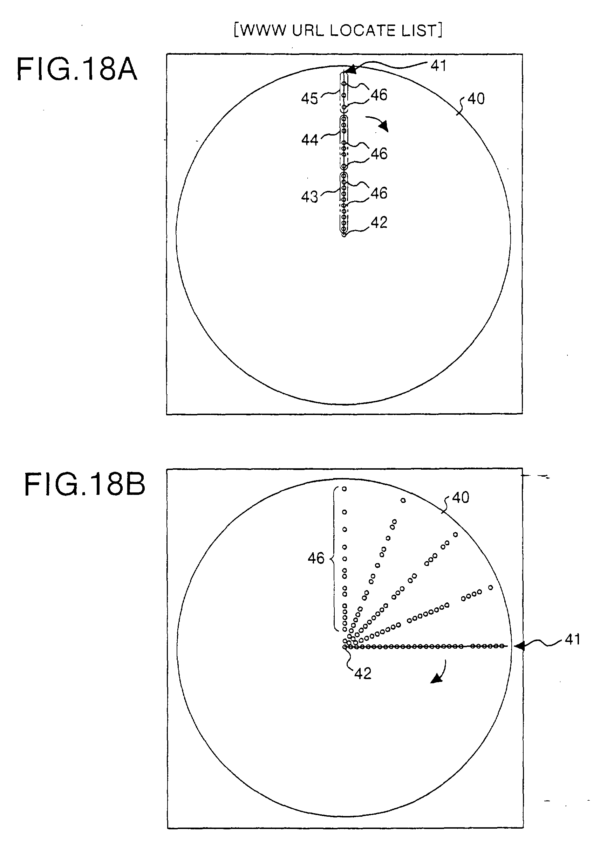

Further, the WWW URL locate list may be displayed in a method enhanced in visible recognition. Fig. 18A and Fig. 18B show an example of the WWW URL locate list displayed like a radar. In Fig. 18A and Fig. 18B, the WWW URL locate list is displayed as a circular region 40 on the monitor, and in this circular region 40, an index line 41 of a length corresponding to the radius of the circle is indicated, starting from the origin of the circle center 42. This index lie 41 is divided into plural (three in this figure) line segment regions 43 to 45 according to the function.

The middle line segment region 44 is a region for showing the number of users connected to the same URL as the URL of the Web page currently viewed by the user. The line segment region 43 closest to the circle center 42 is a region for showing the number of users connected to the URL one layer higher than the URL of the Web page currently viewed by the user, and the line segment region 45 remotest from the circle center 42 is a region for showing the number of users connected to the URL one layer lower than the URL of the Web page currently viewed by the user. For example, if the user is reading the Web page URL "http://www.123.com/456/", the line segment region 43 shows the number of users of "http://www.123.com", the line segment region 44, "http://www.123.com/456/", and the line segment 45, "http://www.123.com/456/789/", respectively.

The line segment regions 43 to 44 display light spots 45 in the number corresponding to the number of users. For example, the index line 41 in Fig. 18A shows the initial state positioned in the 12 o'clock direction, and the line segment regions 43 to 45 show multiple light spots 46 individually. This index line 41 rotates only by a specified angle corresponding to the lapse of time, and displays similarly upon every revolution. The light spot 46 displayed at each rotation position is lit continuously until the index line 41 reaches this position next time. For example, in Fig. 18B, the index line 41 shows the state of rotation in the 3 o'clock direction, and multiple light spots 46 are displayed until rotating to this direction.

In thus displayed WWW URL locate list, if any one of the line segment regions 43 to 45 is selected by clicking, the other users connecting to the URL displayed by the selected one of the line segments 43 to 45 are displayed again as the WWW URL locate list as shown in Fig. 16.

When using such radar-like WWW URL locate list, each user knows the number of users viewing the URL of the same Web page or the URL of neighboring layers at a glance, and, in particular, the change in the number of users with the passing of the time can be known visually.

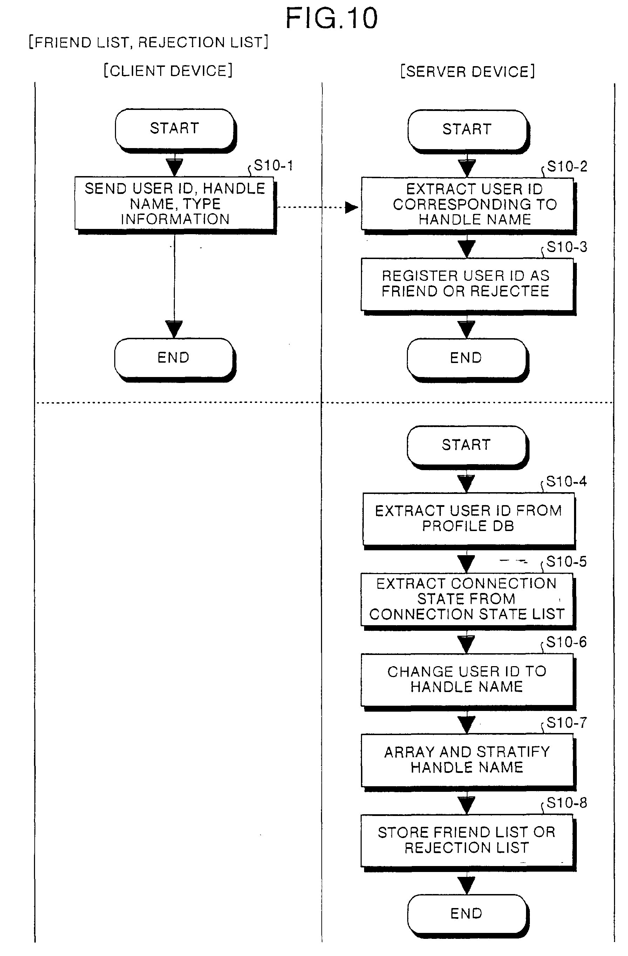

The process of creating and updating the friend list or rejection list is explained. Fig. 10 shows a flowchart of creating and updating process of friend list or rejection list. These lists can be created and updated by using the online URL locate list or WWW URL locate list. Specifically, while the friend list or rejection list is displayed on the monitor, the user selects a desired handle name in the list, and instructs to "Add to the friend list" or "Add to the rejection list" by the pull-down menu or the like. As a result, the user ID of the user making this instruction, selected handle name, and the type information distinguishing the friend list or rejection list are transmitted to the server device 1 (step S10-1).

In the server device 1, by the processing of the validation processing unit 16, the user ID of the other user corresponding to the handle name transmitted from the client device 3 is extracted from the profile DB 28 (step S10-2). This extracted user ID is related to the user ID transmitted from the client device 3, and registered in the profile DB 28 as friend or rejectee depending on the type information (step S10-3).

At this time, the condition may be further added that registration as friend in the friend list is possible only when the same user is not rejected by the other user selected as friend. That is, at the time of registration of friend, the user ID of the person registered as rejectee by other user selected as friend is extracted from the profile DB 28, and when the user ID of the user instructed for registration coincides with this user ID, its registration is rejected. This process can be done in the validation processing unit 16.

Afterwards, when transmission of friend list or rejection list is requested from the client device 3, the user ID of the user registered as friend or rejectee in the profile DB 28 is extracted by the matching unit 13 (step S10-4). The connection state of the user ID thus extracted is extracted from the connection state lists (step S10-5). The user ID extracted at step S10-4 is converted into a handle name by the ID converter 12 (step S10-6), and the handle name is arrayed and stratified according to a prescribed standard in the matching unit 13 (step S10-7).

To the handle name thus arrayed, by adding the connection state extracted at step S10-5, the friend list or rejection list is created or updated, and is stored in the matching information storage unit 21 (step S10-8). The friend list or rejection list thus compiled is called from this matching information storage unit 21 when transmission is requested at an arbitrary timing from the client device 3, and is displayed on the monitor of the client device 3.

Fig. 17 shows an example of friend list. In this friend list, handle names of users registered as friends are stratified in folders. At the side of the handle name, status mark M1 to M3 showing the connection state of the client device 3 corresponding to the handle name is shown, and it is known to be online when the status marks M1 to M3 are lit, and offline when put out (in Fig. 17 only Ml and M2 are lit). Such display method of connection state is not specified.

The chat is explained. The chat usable in this system includes the between users displayed in the online URL locate list or WWW URL locate list (URL chat), the chat between users displayed in the friend list (friend chat), and the chat between unspecified users not relating to the list (unspecified chat).

The unspecified chat is, basically, same as in the conventional chat. That is, by selecting an already open chat room by designating the URL or designating the menu, and the user participates in the chat room to make a dialog.

The URL chat and friend chat is done in the same manner except that the selection method of chat partner is different. That is, in the case of URL chat, a chat partner can be selected from the online URL locate list or WWW URL locate list, and in the case of friend chat, a chat partner can be selected from the friend list.

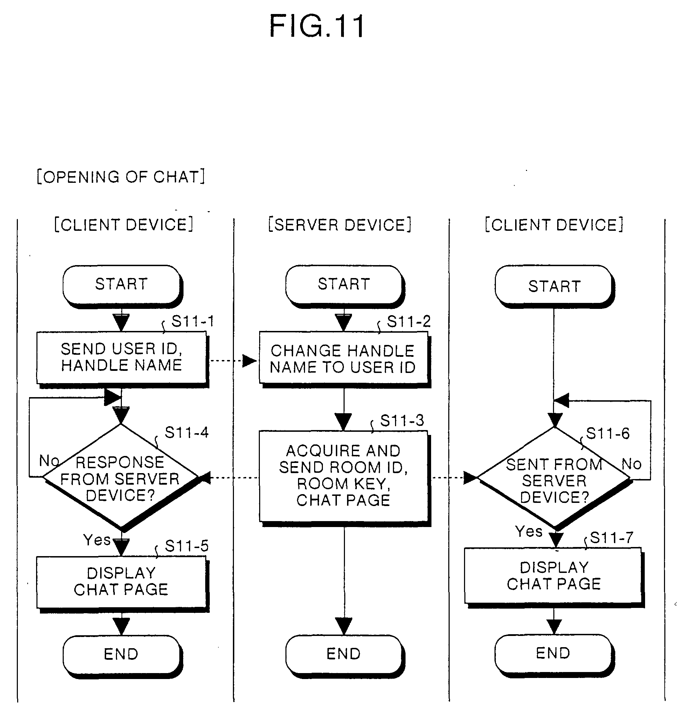

An example of friend chat is explained. Fig. 11 is a flowchart of opening process of friend chat. Supposing a friend list is displayed on the monitor of the client device 3, of the handle names displayed in the friend list, an online handle name is desired as desired, and opening of chat is requested, then the user ID of the user of the client device 3 and the selected handle name are transmitted to the server device 1 (step S11-1). In the server device 1, opening of chat is processed by the chat processing unit 18. That is, the selected handle name is converted into the user ID by the ID converter 12 (step S11-2), and the room ID and room key for opening the chat are obtained from the chat DB 24. Further, a chat page is acquired from the WWW DB 22. This chat page is acquired by creating a new page by adding the handle name of the user to which the chat page is transmitted, to the basic data of the chat page.

Thus acquired room ID, room key and chat page are transmitted to the client device 3 requesting opening of the chat, and the client device 3 corresponding to the user ID converted by the ID converter 12 (step S11-3). In the client device 3, when the chat page is transmitted, the chat page is interpreted by the HTML interpretation unit 39, and displayed on the monitor (steps S11-4 to S11-7). That is, for the user of the client device 3, the chat page appears suddenly on the monitor of the own client device 3. Therefore, the dialog can be actively started to this user.

When opening the chat, the condition may be further added that the partner of chat is not rejected by other users selected as chat partners. That is, at the time of opening the chat, the user ID of the person registered as rejectee by other user selected as chat friend is extracted from the profile DB 28, and when the user ID of the user instructed for opening the chat coincides with this user ID, its registration is rejected. This process can be done in the validation processing unit 16. Such rejection of request may be done similarly in the PB message described later.

After display of chat page, the chat proceeds in the same manner as in the conventional chat. That is, when one participant instructs transmission by writing statement in the chat page, this statement is sent to the server device 1 in GET system or POST system, together with the room ID and room key. In the chat processing unit 18 of the server device 1, presence or absence of transmission of statement is check at specific interval, and only when statement is detected, the chat page in the WWW DB 22 is updated. The chat page displayed in each client device 3 is updated automatically, for example, by reading the same page repeatedly at specific interval, by using the Refresh function of META tag described in the HTML for composing the chat page. The statement in chat in this system is not limited to text input, but audio input is possible by using the microphone of the input device 35. The audio data is processed in the audio processing unit 41 of the client device 3 of the chat partner, and voice is delivered from the speaker of the output device 36.

Herein, participants in the chat can make a private chat by selecting only some of the present chat participants. This selection is same as selection of friend list, and a private chat is opened in the same processing as mentioned above. That is, by the processing of the chat processing unit 18 of the server device 1, new room ID and room key are obtained from the chat DB 24, and transmitted to the client device 3. A new chat page is acquired from the WWW DB 22, and transmitted and displayed in the client device 3. The new chat page can be acquired by creating a new page by adding region data of new chat page and others, to the data of the chat page transmitted in the last place.

This private chat page is not displayed on the monitor of the client device 3 of the user not possessing the room key of this chat page, and users A and C can exchange secrete and private conversations. Such private chat rooms can be increased infinitely within a range permitted by the processing load problems of the server device 1 and client device 3 and the monitor display region problems.

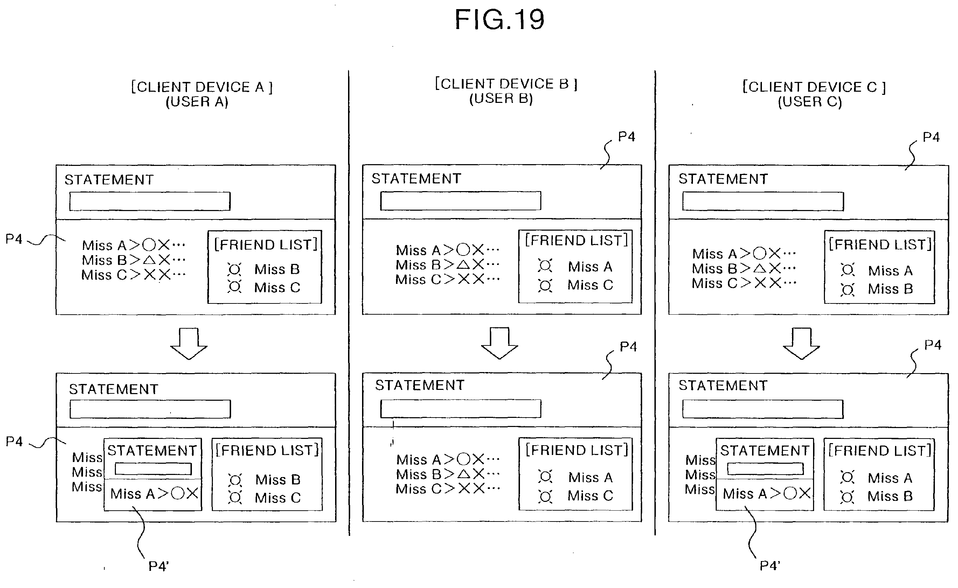

Fig. 19 shows a display example of such chat page. Herein, suppose user A of client device 3A (handle name miss A), user B of client device 3B (handle name miss B), and user C of client device 3C (handle name miss C) are mutually registered in the friend list. When User A requests start of chat by selecting miss B and miss C, chat page P4 is displayed on the monitors of the client devices 3A to 3C by the above processing. Thus, these three friends begin to chat.

Further, when user A requests start of chat by individually selecting miss C, a new chat page P4' is transmitted displayed only in the client devices 3A and 3C by the same process. By using this chat page P4', these two begin to chat privately.

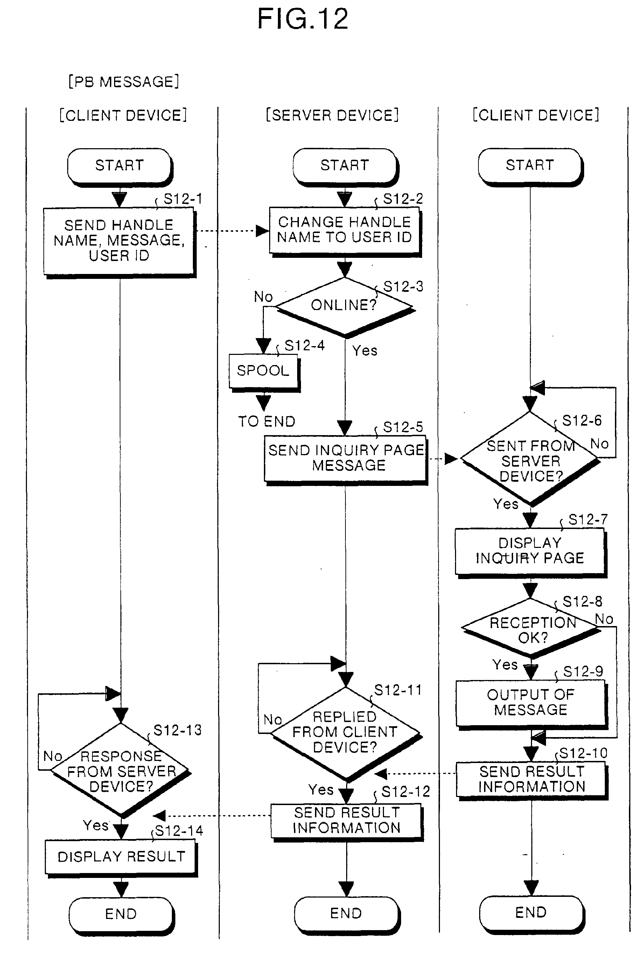

Finally, the process for execution of PB message is explained. Fig. 12 is a flowchart showing execution process of PB message. To transmit the PB message, the destination of transmission must be selected, and this selection is made by using the online URL locate list, WWW URL locate list, or friend list. For example, while the friend list is displayed, together with the chat page, on the monitor of the client device 3AQ, by selecting the handle name of the partner desired to transmit the PB message to, of the handle names displayed in the friend list, and requesting transmission of PB message, this request is processed in the PB message transmitting and receiving unit 40.

By the processing of the PB message transmitting and receiving unit 40, first, the page for message input is displayed on the monitor of the client device 3A. This page for input has at least an input column for entering the message data. When the user A enters the message in this input column and instructs transmission, this message, the selected handle name, and user ID of user A are transmitted to the server device 1 (step S12-1). The message data is not limited to text data, but may be compiled also as video data or audio data.

In the server device 1, the transmitted handle name is converted into the user ID by the ID converter 12 (step S12-2). Consequently, by the processing of the PB message processing unit 19, the connection state of the client device 3B corresponding to the converted user ID is judged by referring to the connection state list stored in the connection information storage unit 20 (step S12-3). If it is offline, the user ID and message transmitted from the client device 3A are related to each other, and spooled in the PB message DB 26 (step S12-4), and processing is over. In this case, the message is transmitted when presence or absence of spool message is inquired from the client device 3B by designating the user ID.

On the other hand, if online at step S12-3, an inquiry page for inquiring acceptance or rejection of reception of message and message content are transmitted to the client device 3B corresponding to the converted user ID (step S12-5). Receiving them, at the client device 3B, first only the inquiry page is displayed (steps S12-6, S12-7), then the user enters acceptance or rejection of reception of the message. Only when accepted, the message is delivered through the monitor or speaker (steps S12-8, S12-9). The information showing the result of acceptance or rejection of reception is transmitted to the server device 1 (step S12-10). This information is transmitted and displayed in the client device 3A through the server device 1 (steps S12-11 to S12-14). Thus, transmission process of PB message is terminated.

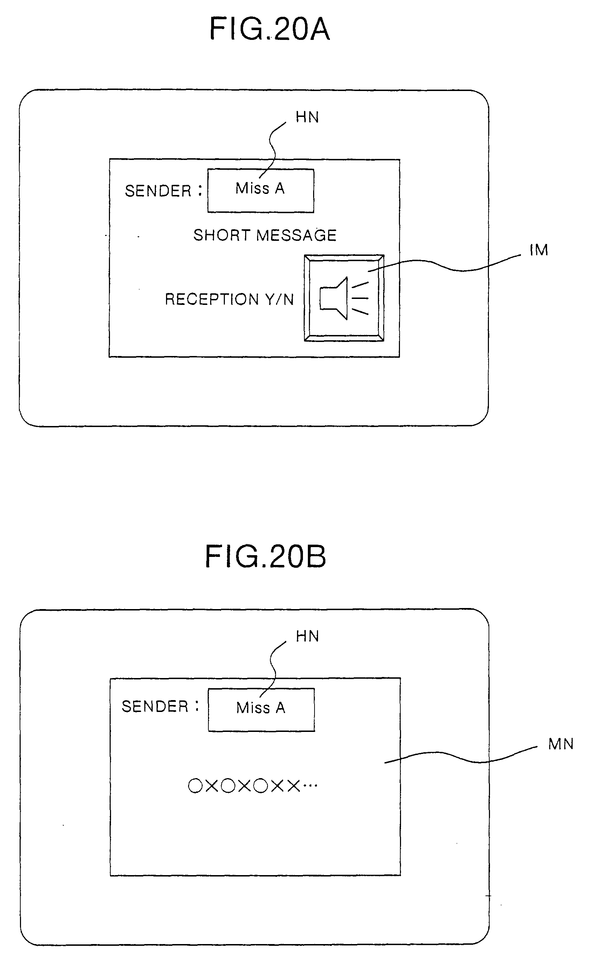

Fig. 20A and Fig. 20B show a display example of inquiry page and PB message page. As shown in Fig. 20A, the inquiry page shows the sender's handle name HM, and reception Y/N as input for accepting or rejecting the reception. If the message includes audio or video data, it is noticed by image IM. The recipient clicks Y or N, and can accept or reject reception. Alternatively, when the image IM is clicked, it is assumed that the reception is accepted.

Thus, in the case of acceptance input of reception, the PB message page of Fig. 20B is displayed. This page shows the sender's handle name HM, and message content MN. In the case of audio message, instead of the message content MN, or together with the message content MN, the audio message is delivered through the speaker.

As described herein, according to the communication system of one aspect of the present invention, when the user of the client device requests opening of a chat, a chat room is opened actively. Therefore, same as in reality or more than in reality, real-time and dynamic communication can be made, and a new communication system capable of newly arousing the interest of the users can be built up.

According to the communication system of another aspect of the present invention, when the user of the client device sends a message, the presence of the message and its content are immediately transmitted, and therefore the trouble when starting up the communication can be eliminated, and a novel communication system capable of attracting the user to the dialog can be built up.

Furthermore, other users reading the same Web page can be easily known, and to such users, the chat or PB message can be sent, and therefore the circle of communication is further widened.

Furthermore, other users encountered on the system can be registered in the friend list, and the partner of chat or message transmission can be selected by referring to this friend list, so that more friendly communication is possible.

Furthermore, if multiple users are displayed, a specific user can be easily searched from these multiple users. Therefore, smoother communication is possible.

Furthermore, by registering undesired partners preliminarily in the rejection list, request from such partners can be rejected automatically. Therefore, inappropriate communication can be limited.

According to the communication system of still another aspect of the present invention, if a person prohibited from using this system attempts to change the identification number in this system, the use of the system by such person can be securely excluded.

According to the communication system of still another aspect of the present invention, the identification information of each user is displayed to other users as handle name, and the identification information is not directly displayed. Therefore, unexpected exposure of identification information to other users can be prevented.

According to the server device of still another aspect of the present invention, by building up a communication system by using this server device, the chat is opened dynamically according to the request from the client device, and real-time and dynamic communication is made, and a novel communication system arousing the interest of the users newly can be built up.

According to the server device of still another aspect of the present invention, by building up a communication system by using this server device, the message is transmitted immediately according to the request from the client device, and real-time and dynamic communication is made. Hence, the trouble of starting up the communication can be eliminated, and a novel communication system capable of attracting the user to the dialog can be built up.

Furthermore, by building up a communication system by using this server device, for example, when a user is reading a Web page, other users reading the same Web page can be easily known. At the same time, for such users, the chat or PB message can be sent, and therefore hitherto unknown people can be encountered incidentally, and the circle of communication is further widened.

Furthermore, by building up a communication system by using this server device, for example, other users encountered on the system can be registered in the friend list, and the partner of chat or message transmission can be selected by referring to this friend list, and it is easier to communicate with people sharing the same hobby, and appropriate encounter of users is promoted, andmore friendly communication is possible.

Furthermore, by building up a communication system by using this server device, since the selected users are displayed as being arrayed and stratified, if multiple users are displayed, a specific user can be easily searched from these multiple users. Therefore, smoother communication is possible.

Furthermore, by building up a communication system by using this server device, for example, by registering undesired partners preliminarily in the rejection list, if opening of chat or transmission of message is requested from the partner registered in the rejection list, such request can be rejected automatically. Therefore, inappropriate communication can be limited.

According to the server device of still another aspect of the present invention, by building up a communication system by using this server device, if a person prohibited from using this system attempts to change the identification number in this system, the use of the system by such person can be securely excluded.

According to the server device of still another aspect of the present invention, by building up a communication system by using this server device, the identification information of each user is displayed to other users as handle name, and the identification information is not directly displayed. Therefore, unexpected exposure of identification information to other users can be prevented.

According to-the communication method of still another aspect of the present invention, by executing each procedure in the communication system, the chat is opened dynamically according to the request from the client device, and real-time and dynamic communication is made, and a novel communication system arousing the interest of the users newly can be built up.

According to the communication method of still another aspect of the present invention, by executing each procedure in the communication system, the message is transmitted immediately according to the request from the client device, and real-time and dynamic communication is made. Hence, the trouble of starting up the communication can be eliminated, and a novel communication system capable of attracting the user to the dialog can be built up.

According to the communication method of still another aspect of the present invention, by executing each procedure in the communication system, if a person prohibited from using this system attempts to change the identification number in this system, the use of the system by such person can be securely excluded.

According to the communication method of still another aspect of the present invention, by executing each procedure in the communication system, the identification information of each user is displayed to other users as handle name, and the identification information is not directly displayed. Therefore, unexpected exposure of identification information to other users can be prevented.

According to the computer-readable recording medium recording a program of still another aspect of the present invention, the communication method according to the present invention can be easily and automatically realized on a computer.

Although the invention has been described with respect to a specific embodiment for a complete and clear disclosure, the appended claims are not to be thus limited but are to be construed as embodying all modifications and alternative constructions that may occur to one skilled in the art which fairly fall within the basic teaching herein set forth.

## Claims

1. A communication system comprising a server device and a plurality of client devices connected through a network and allowing mutual communications among users of the client devices,
the server device having,
a matching unit which selects a candidate user for participant in a chat according to a specified standard, and transmits the information about this user to a client device; and
a chat processing unit which transmits specified information for starting a chat, when start of a chat is requested by specifying whole or part of users selected by the user selecting unit from one client device, to the client device of this specified user, and the one client device issuing this request, and
each of the client device having a display unit which displays the region for chat on the basis of the specified information when this information for starting a chat is transmitted from the server device.

2. A communication system comprising a server device and a plurality of client devices connected through a network and allowing mutual communications among users of the client devices,
the server device having,
a matching unit which selects a candidate user for destination of transmission of message according to a specified standard, and transmits the information about this user to a client device; and
a message processing unit which transmits the content of the message to the client device of the specified user, when message transmission is requested by specifying whole or part of users selected by the user selecting unit from one client device, and when the content of the message is specified, and
each of the client device having an output unit which issues a specified output, when the content of the message is transmitted from the server device, so that at least its presence may be recognized by the user of the client device.

3. A communication system comprising a server device and a plurality of client devices connected through a network and allowing mutual communications among users of the client devices,
the server device having,
a profile storing unit which stores first identification information preliminarily given to the user for identifying the user in the network, second identification information preliminarily given to the user for identifying the user in the communication system, and permit information relating to approval or disapproval of use of the service to the user, being the information stored at least corresponding to the first identification information; and
a validation processing unit which extracts the permit information corresponding to the first identification information from the profile storing unit when the first identification information and second identification information are presented from the client device and use of specific service is requested, and judges approval or disapproval of presentation of service to the client device on the basis of this permit information and the request for use presented from the client device.

4. A communication system comprising a server device and a plurality of client devices connected through a network and allowing mutual communications among users of the client devices,
the server device having,
a profile storing unit which stores identification information preliminarily given to the user for identifying the user in the communication system, and an arbitrary handle name of the user, by relating to each other; and
an ID converting unit which extracts the handle name corresponding to the identification information from the profile storing unit when the identification information is presented from one client device and use of specific service relating to other client device is requested, and converts the identification information depending on this handle name.

5. A server device connected to plural client devices through a network, for allowing mutual communications among users of these client devices, the server device comprising:
a matching unit which selects a candidate user for participant in a chat according to a specified standard, and transmits the information about this user to a client device; and
a chat processing unit which transmits specified information for starting a chat, when start of a chat is requested by specifying whole or part of users selected by the user selecting unit from one client device, to the client device of this specified user, and the one client device issuing this request.

6. A server device connected to plural client devices through a network, for allowing mutual communications among users of these client devices, the server device comprising:
a matching unit which selects a candidate user for destination of transmission of message according to a specified standard, and transmits the information about this user to a client device; and
a message processing unit which transmits the content of the message to the client device of the specified user, when message transmission is requested by specifying whole or part of users selected by the user selecting unit from one client device, and when the content of the message is specified.

7. A communication system according to claim 1 or 2 or a server device according to claim 5 or 6, wherein the matching unit selects the user of other client device to which the same information is transmitted in the last place,
concerning the information transmitted in the last place to each client device, among the users of the client devices of which connection is established at the present.

8. A communication system according to claim 1 or 2 or a server device according to claim 5 or 6, wherein the matching unit selects the user preliminarily registered as having specific relation by the users of each client device,
among the users of the client devices of which connection is established at the present.

9. A communication system according to claim 1 or 2 or a server device according to claim 5 or 6, wherein the matching unit arrays or stratifies the selected users according to a specified standard.

10. A communication system according to claim 1 or 2 or a server device according to claim 5 or 6 further comprising a validation processing unit which rejects request of a specific processing, when a specific processing is requested from one client device to another client device,
if the user of the one client device has been already registered as having a specific relation by the user of the other client device.

11. A server device connected to plural client devices through a network, for allowing mutual communications among users of these client devices, the server device comprising:
a profile storing unit which stores first identification information preliminarily given to the user for identifying the user in the network, second identification information preliminarily given to the user for identifying the user in the communication system, and permit information relating to approval or disapproval of use of the service to the user, being the information stored at least corresponding to the first identification information; and
a validation processing unit which extracts the permit information corresponding to the first identification information from the profile storing unit when the first identification information and second identification information are presented from the client device and use of specific service is requested, and judges approval or disapproval of presentation of service to the client device on the basis of this permit information and the request for use presented from the client device.

12. A server device connected to plural client devices through a network, for allowing mutual communications among users of these client devices, the server device comprising:
a profile storing unit which stores identification information preliminarily given to the user for identifying the user in the communication system, and an arbitrary handle name of the user, by relating to each other; and
an ID converting unit which extracts the handle name corresponding to the identification information from the profile storing unit when the identification information is presented from one client device and use of specific service relating to other client device is requested, and converting the identification information depending on this handle name.

13. A communication method allowing mutual communications among users of client devices by using plural client devices connected to a server device through a network, wherein the server device executes,
a matching step of selecting a candidate user for participant in a chat according to a specified standard, and transmitting the information about this user to a client device; and
a chat processing step of transmitting specified information for starting a chat, when start of a chat is requested by specifying whole or part of users selected by the user selecting unit from one client device, to the client device of this specified user, and the one client device issuing this request, and
the client device executes a display step of displaying the region for chat on the basis of the specified information when this information for starting a chat is transmitted from the server device.

14. A communication method allowing mutual communications among users of client devices by using plural client devices connected to a server device through a network, wherein the server device executes,
a matching step of selecting a candidate user for destination of transmission of message according to a specified standard, and transmitting the information about this user to a client device; and
a message processing step of transmitting the content of the message to the client device of the specified user, when message transmission is requested by specifying whole or part of users selected by the user selecting unit from one client device, and when the content of the message is specified, and
the client device executes an output step of issuing a specified output, when the content of the message is transmitted from the server device, so that at least its presence may be recognized by the user of the client device.

15. A communication method allowing mutual communications among users of client devices by using plural client devices connected to a server device through a network, wherein the server device executes,
a profile storing step of storing first identification information preliminarily given to the user for identifying the user in the network, second identification information preliminarily given to the user for identifying the user in the communication system, and permit information relating to approval or disapproval of use of the service to the user, being the information stored at least corresponding to the first identification information; and
a validation processing step of extracting the permit information corresponding to the first identification information from the profile storing unit when the first identification information and second identification information are presented from the client device and use of specific service is requested, and judging approval or disapproval of presentation of service to the client device on the basis of this permit information and the request for use presented from the client device.

16. A communication method allowing mutual communications among users of client devices by using plural client devices connected to a server device through a network, wherein the server device executes,
a profile storing step of storing identification information preliminarily given to the user for identifying the user in the communication system, and an arbitrary handle name of the user, by relating to each other; and
an ID converting procedure of extracting the handle name corresponding to the identification information from the profile storing unit when the identification information is presented from one client device and use of specific service relating to other client device is requested, and converting the identification information depending on this handle name.

17. A computer-readable recording medium recording a program for allowing mutual communications among users of client devices by using plural client devices connected to a server device through a network, wherein the server device executes,
a matching step of selecting a candidate user for participant in a chat according to a specified standard, and transmitting the information about this user to a client device; and
a chat processing step of transmitting specified information for starting a chat, when start of a chat is requested by specifying whole or part of users selected by the user selecting unit from one client device, to the client device of this specified user, and the one client device issuing this request.

18. A computer-readable recording medium recording a program for allowing mutual communications among users of client devices by using plural client devices connected to a server device through a network, wherein the server device executes,
a matching step of selecting a candidate user for destination of transmission of message according to a specified standard, and transmitting the information about this user to a client device; and
a message processing step of transmitting the content of the message to the client device of the specified user, when message transmission is requested by specifying whole or part of users selected by the user selecting unit from one client device, and when the content of the message is specified.

19. A computer-readable recording medium recording a program for allowing mutual communications among users of client devices by using plural client devices connected to a server device through a network, wherein the server device executes,
a profile storing step of storing first identification information preliminarily given to the user for identifying the user in the network, second identification information preliminarily given to the user for identifying the user in the communication system, and permit information relating to approval or disapproval of use of the service to the user, being the information stored at least corresponding to the first identification information; and
a validation processing step of extracting the permit information corresponding to the first identification information from the profile storing unit when the first identification information and second identification information are presented from the client device and use of specific service is requested, and judging approval or disapproval of presentation of service to the client device on the basis of this permit information and the request for use presented from the client device.

20. A computer-readable recording medium recording a program for allowing mutual communications among users of client devices by using plural client devices connected to a server device through a network, wherein the server device executes,
a profile storing step of storing identification information preliminarily given to the user for identifying the user in the communication system, and an arbitrary handle name of the user, by relating to each other; and
an ID converting procedure of extracting the handle name corresponding to the identification information from the profile storing unit when the identification information is presented from one client device and use of specific service relating to other client device is requested, and converting the identification information depending on this handle name.
